# EUROPEAN PATENT SPECIFICATION

(11) **EP 1 155 168 B1**
(45) Date of publication and mention of the grant of the patent: **26.07.2006**
(21) Application number: 99924090.6
(22) Date of filing: 18.05.1999
(51) Int. Cl.: C25D 5/02

(54) **METHOD FOR SELECTIVE PLATING OF A METAL SUBSTRATE USING LASER DEVELOPED MASKING LAYER AND APPARATUS FOR CARRYING OUT THE METHOD**
VERFAHREN UND VORRICHTUNG ZUR SELEKTIVEN PLATTIERUNG EINES METALLISCHEN TRÄGERS MIT MITTELS EINES LASERS ABGETRAGENEN MASKIERUNGSSCHICHT
PROCEDE DE PLACAGE SELECTIF DE SUBSTRAT METALLIQUE UTILISANT UNE COUCHE DE MASQUAGE OBTENUE PAR LASER ET APPAREIL A CET EFFET

(30) Priority: 27.02.1999 SG 9900732
(43) Date of publication of application: 21.11.2001
(73) Proprietor: AEM-Tech Engineers Pte Ltd., Singapore 738357 (SG); STMicroelectronics S.r.l., 20041 Agrate Brianza (Milano) (IT)
(72) Inventor: TOK, Kian You,c/o AEM-Tech Engineers Pte Ltd, Singapore 738357 (SG); CREMA, Paolo, I-Vimercate (IT)
(74) Representative: Price, Nigel John King
(86) International application number: PCT/SG1999/000047
(87) International publication number: WO 2000/052231

(56) References cited:
- US-A- 4 432 855
- US-A- 4 519 876
- US-A- 4 780 177
- US-A- 4 877 644
- US-A- 4 904 498
- US-A- 5 035 918
- US-A- 5 137 618

## Description

### Field of the invention

The invention relates to a method for selective plating of a metal substrate, in particular IC lead frames, with a precious metal, and an apparatus for carrying out said method. In particular, the method and the corresponding apparatus according to the invention are adopted to be used in a so-called Reel to Reel and Strip to Strip plating procedure and machine, respectively.

### Background of the invention

In the course of the selective plating of a metal substrate, such as an IC lead frame, a plating resist layer is coated on the entire surface of the metal substrate, and is then selectively removed by laser development. Thus, the plating resist layer is patterned, i.e. removed from the surface of the metal substrate in selected areas, thereby exposing the surface of the metal substrate in those areas where it is to be metal plated with a precious metal. The metal substrate is then subjected to a plating process so that the precious metal is electro-plated on the metal substrate in the selected areas. Subsequently, the remaining plating resist layer is removed from the surface of the metal substrate.

Traditionally, the selective metal plating of a metal substrate was carried out by means of a mechanical masking system which was used to determine or select the positions or areas of the metal substrate to be metal plated. However, due to numerous disadvantages, like the bleeding out of the precious metal from the area to be metal plated through unavoidable small gaps between the metal substrate and the mechanical system pressed thereto, possible damages of the metal substrate caused by the pressure applied thereto by the masking system, etc., such mechanical masking systems have recently been replaced by the use of a plating resist layer covered on the metal substrate and being selectively developed, i.e. removed, by laser irradiation in order to expose desired surface areas of the metal substrate to be metal plated.

Such a method for laser treating a plating resist coated metal substrate in order to effect the removal of the resist at selective areas of the metal substrate to be metal plated is disclosed in U.S.Pat. Nos. 4, 877, 644. According to this method, a polymeric plating resist is first applied preferably by electrostatical spraying to the metal substrate, followed by selective laser ablation of the resist to expose portions of the metal substrate to metal plating. This document teaches that it is fundamental for the success of the method that the operating parameters and character of the laser used for the ablation be correlated with those of the plating resist and the metal substrate. In particular, in this method the plating resist should have a low optical coefficient of absorption no greater than approx. 1000cm⁻¹ for a 3 micron film thickness, the polymeric plating resist should have a low reflectance, less than approx. 70%, and for the laser ablation of the plating resist an excimer laser having a wavelength from approx. 248 to 360 nm should be used. Under these circumstances, during the laser ablation process most of the laser energy passes through the plating resist into the metal substrate and is absorbed therein with the result of heating the metal substrate and thereby causing ablative removal of the plating resist over the selectively laser irradiated areas of the metal substrate.

Excimer lasers of the type described above can be usefully employed in said method for achieving a precise removal of the plating resist even with a single laser shot resulting in patterns with sharp cut edges.

However, it is a disadvantage of this known method that the relative movement between the laser beam irradiated on the plating resist and the metal substrate covered by said plating resist which is necessary to selectively remove the resist along the desired pattern can only be achieved by mechanically moving the metal substrate while maintaining the irradiation direction of the laser beam. This results in the method not being usable for metal plating of a metal substrate in a reel to reel and strip to strip (hold by the belt) processes, since in this case the metal substrate is carried on a belt from loading or from a supply of de-reeler through different treatment stations, such as the laser ablation station, pre-treatments, post-treatments, to a reeler, and, therefore, the movement of the metal substrate is restricted to the reel to reel and belt direction, thereby making it impossible to achieve any pattern along any other direction. Regardless of this restriction of this know method, both the mechanical movement of the metal substrate and the highest possible repetition rate of an excimer laser of 500Hz result in a slow processing speed which is unacceptable in the light of the current trend of providing high speed selective plating methods Furthermore, due to the halogens (Cl or F) existing in excimer lasers, these lasers must be handled with great care and require a cost-intensive environment in order to rule out a possible danger to human life.

US-A-4,432,855 discloses a method for reel-to-reel selectively plating a metal substrate comprising the steps of applying onto the substrate a polymeric resist layer followed by removing selected areas of the resist layer according to a predetermined pattern and subjecting the substrate to metal electroplating at the exposed areas thereof, whereby said selective removal is effected by means of a laser beam which is mirror-scanned under computer control.

US 5,035,918 discloses conditions under which a laser beam may remove a polymeric resist from a metal substrate.

US 4,519,876 is directed to a method for electroplating selected regions of an anodised metal substrate, by which method a laser beam is steered to irradiate selected areas of the substrate in order to fracture the anodised coating at these areas, whereby regions of the substrate are exposed according to a predetermined pattern, followed by electroplating the substrate at said exposed regions. A preferred laser is an Nd:YAG emitting at 1.06 micrometers.

It is therefore an object of the invention to provide a method for selective plating of a metal substrate using laser developed masking layer in which the laser development process can be carried out in a safe, reliable and speedy manner and which can be used in both reel to reel and strip to strip metal plating process.

It is a further object of the invention to provide an apparatus for carrying out the inventive method which operates at high speed, is cheap, easy to use and small in size.

### Summary of the invention

In order to achieve these objects, this invention is directed to a method for selective plating of a metal substrate comprising the steps of applying a thin layer of a polymeric plating resist on the metal substrate by electrophoretic coating; curing said plating resist on said substrate; selectively removing said plating resist from said substrate by subjecting said plating resist to a laser beam having a wavelength in the range of 400 to 1200 nm and scanning said laser beam on said plating resist by means of an optical galvo system according to a pattern along which the metal substrate is to be metal plated, wherein the plating resist is selected so as to be at least substantially transparent to said laser beam and the metal substrate is selected to absorb at least a substantial part of the energy of said laser beam, whereby a substantial part of the laser energy is transmitted through said plating resist and absorbed by said metal substrate resulting in said metal substrate being heated at the surface thereof to form a plasma at the interface between the coating resist and the metal substrate, the plasma causing the plating resist thereover to blow off thereby exposing the surface of the metal substrate along said pattern suitable for metal plating; and subjecting said substrate to metal plating at the exposed surface thereof.

According to the invention it has been found that the above described advantages of laser ablation can be reached by using a laser operating in a wavelength range of 400 to 1200 nm, i.e. substantially in the green light range. It has further been recognized that by using a laser in said wavelength range the mechanical movement of the metal substrate needed for the removal of the plating resist along the desired pattern in the above discussed known methods can be eliminated, since laser beams having a wavelength in this range can be scanned by an optical galvo system. This, in turn, means that instead of mechanically moving the metal substrate while maintaining the irradiation direction of the laser beam it is possible to scan the laser beam along the desired pattern while maintaining the metal substrate in at least substantially motionless position, resulting in the possibility to increase the processing speed. In this context the motionless position of the metal substrate may signify that a possible movement of the metal substrate in the reel to reel or belt direction is neglectable compared to the high processing speed of the laser beam.

According to the invention it is possible to use any type of laser emitting a laser beam in the wavelength range of 400 to 1200 nm if the laser used is correlated to the plating resist and the metal of the metal substrate so as to fulfil the above mentioned conditions with regard to the transparency of the resist and the absorption of the laser beam by the metal substrate, respectively. However, according to a preferred embodiment of the invention the selective removal of the plating resist is carried out by a frequency doubled Nd:YAG laser emitting a laser beam with a wavelength of 532 nm and operated at a repetition rate of approx. 1 to 300 Hz or higher, preferably at approx. 300Hz.

Compared to other types of lasers, such as an excimer laser, the Nd:Yag laser, being a solid state laser, is inexpensive, not dangerous to human beings at all, small-sized and easy to maintain and handle.

The actual maximum processing speed of the method according to the invention is, in most cases, limited by this highest possible repetition rate of the laser, since the optical galvo system according to the invention could scan the laser beam with even a much higher speed up to about 1000 mm/sec. On the other hand, however, such a high laser beam repetition rate could not be utilized in the method using mechanical moving of the metal substrate, since in this case the highest possible speed would be restricted by the speed of the mechanical movement of the metal substrate.

According to a further preferred embodiment of the invention, the selective removal of said plating resist is carried out by a single shot of said Nd:YAG laser having an energy of 5 to 100 mJ per pulse, an energy density of 6 to 130 mJ/mm², a pulse duration of 4 to 30 ns and a peak power of 0.3 to 16 MW. Experiments with the inventive method show that good results can be achieved if the laser is operated under these operating parameters.

Such a single shot removal of the plating resist is superior to a multiple shot laser removal, since the latter could lift off the plating resist not only along the desired pattern, but also at the boundary of or, in an even worse case, around the desired pattern, thereby reducing the metal plating accuracy.

It has been found that, compared to spraying, or chemical or physical vapor deposition (CVD and PVD, resp.), if the plating resist is coated by electrophoretic coating the subsequent development of the plating resist by the laser used according to the invention can be carried out more reliably and precisely, mainly due to the very uniform thickness of the plating resist layer achieved by this coating method. Furthermore, the electrophoretic coating can be carried out in a fast manner, thereby contributing to the object of the invention to provide a high speed method. In contradistinction to other known coating methods, a further advantage of the electrophoretic coating is that it can be applied in a continuous line, i.e. in a reel to reel or strip to strip plating method and machine, respectively.

Advantageously, an epoxyurethane, acrylic or epoxy based plating solution is used for producing the polymeric plating resist on the metal substrate by the electrophoretic coating.

According to the invention, the material of the metal substrate has to be selected such as to absorb a substantial part of the laser energy emitted by the laser and transmitted through the polymeric plating resist, thereby heating the metal substrate to form a plasma at the interface between the polymeric plating resist and the metal substrate which blows off the plating resist at the areas radiated by the laser beam. Such suitable materials for the metal substrate are e.g. copper and copper alloys, but also silver, iron and nickel. According to the invention it has been found that the above described effect can be best achieved with the laser used according to the invention if the metal substrate is selected from a group consisting of copper and copper alloys, especially copper oxides.

With the inventive selective plating method different plating metals, such as Au, Ag, Ni or NiPd, can be plated on the surface of the metal substrate exposed by the selective laser development according to the invention.

According to the invention an apparatus for carrying out the inventive plating method is provided, wherein the apparatus comprises a polymeric plating station for applying a thin layer of a polymeric plating resist on the metal substrate by electrophoretic coating; a curing station for curing said plating resist on said substrate; a laser device for selectively removing said plating resist from said substrate, said laser device comprising a laser emitting a laser beam with a wavelength in the range of 400 to 1200 nm and an optical galvo system for scanning said laser beam on said plating resist according to a pattern along which the plating resist is to be removed from the metal substrate to expose a surface of the metal substrate for metal plating; and a metal plating station for subjecting said metal substrate to metal plating at the exposed surface thereof.

In a preferred embodiment of the apparatus according to the invention the optical galvo system comprises a mirror for deflecting the laser beam emitted from said laser onto the plating resist coated on the metal substrate, a lens for focusing the laser beam deflected by said mirror, and driving means for tilting said mirror for scanning the deflected laser beam on said plating resist along said pattern.

Although the laser used in the apparatus according to the invention can be any type of laser which emits a laser beam with a wavelength in the range of 400 to 1200 nm, in a preferred embodiment of the inventive apparatus the laser is a frequency doubled Nd:YAG laser emitting a laser beam with a wavelength of 532 nm and operated at a repetition rate of about 300 Hz.

The method and apparatus according to the invention can be used for the selective plating of any kind of metal substrates, such as electrical contacts or the like. -In particular, the inventive method and the corresponding apparatus can be used advantageously for the selective metal plating of lead frames of integrated circuits (IC) both in strip to strip and reel to reel systems in continuous as well as step and repeat processings. Due to the specific laser emitting a laser beam in the wavelength range of 400 to 1200 nm and, therefore, being scanable by an optical galvo system thereby eliminating the necessity of a mechanical movement of the substrate to be plated, and due to the high speed characteristic of the method according to the invention, the inventive method and apparatus can most advantageously be used in a reel to reel plating machine.

With the method and apparatus according to the invention it is further possible to metal plate an IC lead frame, in particular selected portions thereof, such as the lead tips, the leads and/or the die pad, with the so-called mixed wire technology, wherein different plating metals are plated (i.e. so-called selective material plating) at different locations (i.e. so-called selective position plating) and, if necessary, in different sizes on the lead frame. It is further possible to carry out the metal plating in the so-called multi-layer technology, thereby producing more than one layer of noble plating metals on the selected portion of the lead frame. Furthermore, by using the selective plating technology according to the invention it is also possible to carry out a so-called profile plating, i.e. plating of different portions of an IC lead frame having a stepped (uneven) and/or round surface profile.

### Brief description of the drawings

The accompanying drawings, which are incorporated into and constitute a part of the description of the invention, illustrate preferred embodiments of the invention and serve to explain the principles of the invention more in detail. It is to be understood, however, that the drawings are for illustration purposes only and do not limit the scope of protection which is defined by the attached claims.

FIG. 1 is a schematic representation of the processing stations of a reel to reel plating machine comprising a selective plating apparatus according to the invention.

FIG. 2 schematically illustrates the laser treatment station for laser development of a polymeric plating resist on a metal substrate according to the invention.

### Detailed description of preferred embodiment

According to a preferred embodiment of the invention the inventive method is used for the selective metal plating of an IC lead frame made of copper or copper alloy in a reel to reel plating machine 1.

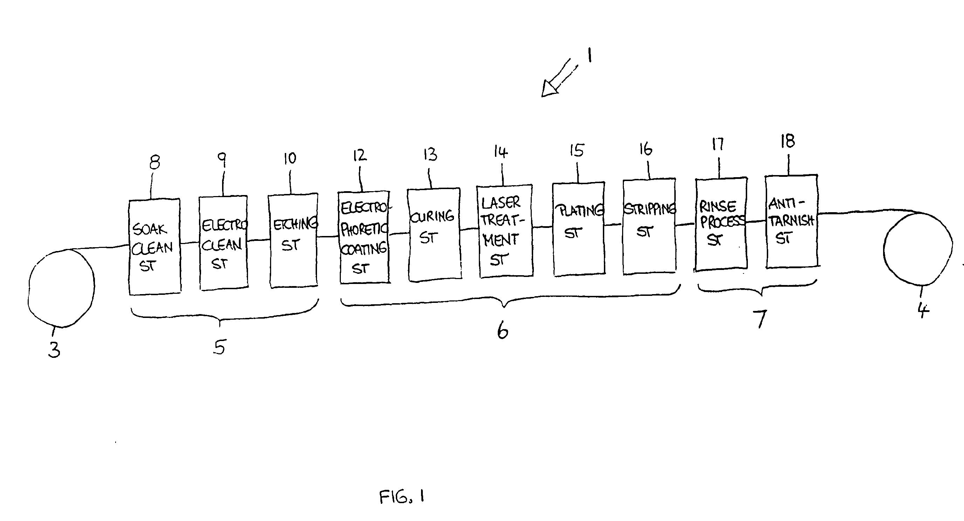

Figure 1 schematically shows the different processing sections and stations of such a reel to reel machine 1.

IC lead frames in reel form, made of copper or copper alloy, by which a laser beam having a wavelength of 532 nm is very well absorbed, are wound off from the de-reel 3 and transferred through the various processing stations 8 to 18 of the reel to reel machine 1 at the end of which the lead frame with metal plated is wound up to a take-up reeler 4 of the reel to reel machine 1.

In a standard metal plating process the reel to reel machine 1 according to the invention basically comprises a pre-treatment section 5, a metal plating section 6 and a post-treatment section 7 through which the IC lead frames are transferred from de-reeler 3 to reeler 4.

In the pre-treatment section 5 the lead frames are prepared for the subsequent metal plating process by removing contaminations existing at the surface of the IC lead frames to be metal plated. Such contaminations can be oil, organic compounds and oxides. For the removal of such contaminations the pre-treatment section 5 comprises a soak clean station 8, in which oil present on the surface of the lead frames is removed, an electro-clean station 9, in which an electro-clean operation is applied to the lead frames to remove the organic compounds therefrom as well as to reduce roughness of and to eliminate burrs on the surface thereof, and a chemical etching station 10 in which the lead frames are etched by a mixed acid to remove the oxides from the surface of the lead frames (so-called pickle process). In between and after these treatment stations 8, 9 and 10 air blow and water rinse 11 are applied to the lead frames in order to retain the chemicals and to prevent further contamination of the lead frames.

After the surface of the lead frames had been cleaned of oil, organic compounds and oxides in the pre-treatment section 5 by the above described procedures in the respective treatment stations 8, 9 and 10, the lead frames are carried on into the metal plating section 6.

In the shown embodiment of the invention the metal plating section 6 comprises an electrophoretic coating station 12, a curing station 13, a laser treatment station 14, a metal plating station 15 and a plating resist stripping station 16.

In the electrophoretic coating station a thin layer of polymeric plating resist is applied to the entire surface of the IC lead frames. According to the invention, due to the utilization of the electrophoretic coating process, this plating resist coating step can be carried out in a very speedy manner. Furthermore, the electrophoretic coating process ensures that the plating resist is uniformly deposited on the lead frame, the uniformity of which is, in its turn, an important criteria for the success of the laser development by the specific laser used according to the invention and described more in detail below in conjunction with the laser treatment station 14.

According to the preferred embodiment of the invention, in the electrophoretic coating process carried out in process station 12, either an epoxyurethane or an acrylic or an epoxy based plating solution is used for producing the polymeric plating resist.

If an epoxyurethane based plating solution is used, the electrophoretic coating is carried out over 5 to 30 seconds at a temperature of 38 to 42°C and a voltage of 120 to 150 V.

If an acrylic based plating solution is used, the electrophoretic coating is carried out over 10 to 30 seconds at a temperature of 20 to 30°C and a voltage of 40 to 80 V.

Further, if an epoxy based plating solution is used, the electrophoretic coating is carried out over 5 to 30 seconds at a temperature of 20 to 25°C and a voltage of 40 to 60 V.

In each case, the used coating chemicals should be pH valued at 6 to 6.3.

Under these electrophoretic coating process parameters a polymeric plating resist with a thickness of 3 to 10 µm is produced on the frame leads.

Following the electrophoretic coating process, the lead frames are subjected to a cold DI (deionized) water rinse and are dried by cold air blow and transported to the curing station 13 in which the metal plating resist is cured for approx. 10 to 30 seconds at a temperature of about 180 to 250°C. Subsequently the lead frames are rinsed with cold DI water and transported into the laser treatment station 14.

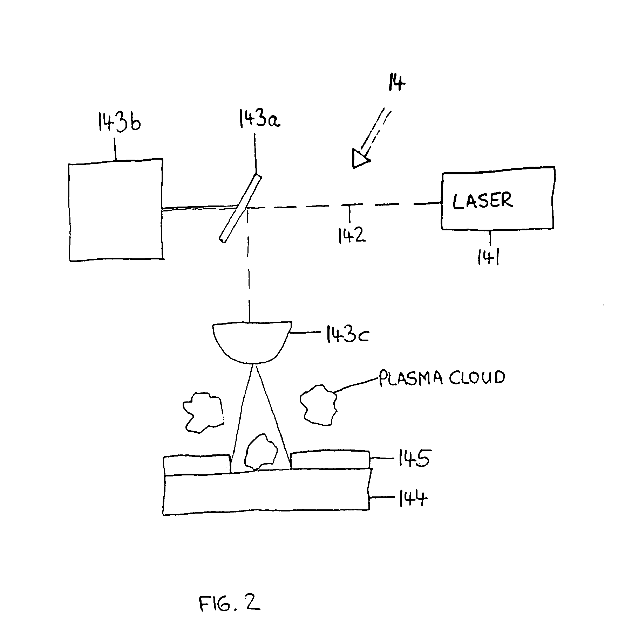

The basic structure of the laser treatment station 14 is shown in figure 2. As shown in this figure, the laser treatment station comprises a pulsed Nd:YAG laser 141 operated with doubled frequency thereby emitting a laser beam 142 having a wavelength of 532 nm, and at a repetition rate of approx. 300 Hz.

An optical galvo system 143 comprising a mirror 143a, driving means 143b coupled to the mirror 143a for tilting the same, and a focusing lens 143c is arranged in the radiation path of the laser beam 142 emitted by the laser 141. The optical galvo system 143 is arranged for deflecting and directing the laser beam 142 onto the lead frame 144 covered by the metal plating resist 145. The laser beam 142 irradiated onto the lead frame 144 through the plating resist 145 is used, as described above, for removing the plating resist 145 from the lead frame 144 at selected areas thereof which are to be metal plated. The location of these areas, the sum of which establishes a pattern, is stored in a computer (not shown), which, in its turn, is coupled with the driving means 143b for controlling the drive of the mirror 143a and thereby the scanning path of the laser beam 142 on the plating resist 145 and the lead frame 144. In this way, the optical galvo system 143 can move the laser beam 142 from point to point on the plating resist 145 to remove the same from the lead frame 144 in single dots or in lines according to the pattern stored in the computer. Due to the high laser repetition rate of about 300 Hz and the high laser scanning speed being achievable by the optical galvo system, a very high speed plating resist removal can be achieved.

In particular, the plating resist removal takes place at the interface between the polymeric plating resist 145, which transmits at least a substantial part of the laser energy, and the copper or copper alloy lead frame 144, which absorbs a substantial part of the laser energy. The laser energy of 5 to 100 mJ released with a very short pulse of about 4 to 30 ns causes a peak laser power of up to several Megawatts (0.3 to approx. 16 MW) which, in its turn, results in a heating of the lead frame, thereby causing a plasma formation at this interface. The plasma cloud produced in this way blows off the plating resist 145 from the lead frame 144 in the laser irradiated areas according to the preprogrammed pattern stored in the computer, thereby exposing the surface of the lead frame 144 in the areas according to this pattern. The plating resist removal at a given location can be achieved by a single shot of the Nd:YAG laser which is, as mentioned above, superior to the multiple shot removal. Furthermore, the diameter of the laser beam can be varied by the optical system according to the invention from few microns, theoretically from 0.532 nanometers, to some millimeters. Based on these diameter values, laser spot position and, therefore, plating area tolerances of less than 50*µ*m can be achieved.

As an example, with a laser beam diameter of 2 mm and a laser repetition rate of 300 shots/second it is possible to open an area (i.e. to remove the plating resist from an area) of 942 mm²/s (1mm²*3.14*300Hz) resulting in a very high speed, high throughput process.

As shown in figure 1, after the plating resist removal in the laser treatment station 14, the lead frame is subjected to cold DI water rinse and transferred to the metal plating station 15, in which the lead frame is subjected to a dip plating in a plating bath. As plating materials silver, gold, nickel and nickel palladium can be used.

Following the metal plating in the metal plating station 15 the lead frame is subjected again to a cold DI water rinse and is transported to the plating resist stripping station 16 being, in this embodiment of the invention, the last station of the metal plating section 6. In the plating resist stripping station 16 the polymeric plating resist is removed. In particular, in order to enhance the quality of the produced metal plated lead frame, it is advantageous to carry out a two-stage stripping process for the removal of the plating resist. In this case a first stripping step in a water soluble solvent, in particular paint stripper commercial product halide free (dedicated for epoxyuretane based coating), mixed solution water based of Butilcellosolve 2%,TricloroEthilene 2-5%(dedicated for acrylic cased coating). It is possible for acrylic based coating, apply a water solution of Lactic Acid 10%, Butilcellosolve 1% with current flowing as a reverse (leadframes as anode), is carried out for 10 seconds at room temperature, and 5 voltages, followed by a cold DI water rinse and a second stripping step being similar to the first stripping step.

Then the lead frame carried by the carrier belt enters the post-treatment section 7, comprising further hot and cold DI water rinse process stations 17 to ensure perfect cleaning of the metal plated lead frame and an anti-tarnish station 18 for applying an anti-tarnish process for the protection of the metal plated lead frames. Finally, the lead frames are dried by warm air and wound up into reeler 4.

If different materials and/or multi-layers are to be metal plated on the same lead frame, two, three or more metal plating sections 6 are arranged in the reel to reel machine 1 between the pre-treatment section 5 and the post-treatment section 7. For example, the process flow can basically consist of the following steps: pre-treatment, first electrophoretic coating, first laser development, first metal plating (e.g. silver plating), second electrophoretic coating, second laser development at the same or different locations compared to the first laser development, second metal plating (e.g. gold plating), ..... stripping and post-treatment.

## Claims

1. Method for selective plating of a metal substrate comprising the steps of
applying a thin layer of a polymeric plating resist on the metal substrate by electrophoretic coating,
curing said plating resist on said substrate,
selectively removing said plating resist from said substrate by subjecting said plating resist to a laser beam having a wavelength in the range of 400 to 1200 nm and scanning said laser beam on said plating resist by means of an optical galvo system according to a pattern along which the metal substrate is to be metal plated, wherein the plating resist is selected so as to be at least substantially transparent to said laser beam and the metal substrate is selected to absorb at least a substantial part of the energy of said laser beam, whereby a substantial part of the laser energy is transmitted through said plating resist and absorbed by said metal substrate resulting in said metal substrate being heated at the surface thereof to form a plasma at the interface between the coating resist and the metal substrate, the plasma causing the plating resist thereover to blow off thereby exposing the surface of the metal substrate along said pattern suitable for metal plating,
subjecting said substrate to metal plating at the exposed surface thereof.

2. Method according to claim 1, wherein the selective removal of said plating resist is carried out by a frequency doubled Nd:YAG laser emitting a laser beam with a wavelength of 532 nm and operated at a repetition rate of about 300 Hz.

3. Method according to claim 2, wherein the selective removal of said plating resist is carried out by a single shot of said Nd:YAG laser having an energy of 5 to 100 mJ per pulse, an energy density of 28 to 50 mJ/mm², a pulse duration of 3 to 30 ns and a peak power of 0.3 to 16 MW.

4. Method according to claim 1, wherein an epoxyurethane, acrylic or epoxy based plating solution is used for producing said polymeric plating resist on the metal substrate by said electrophoretic coating.

5. Method according to claim 4, wherein the electrophoretic coating is carried out with said epoxyurethane based plating solution over 5 to 30 seconds at a temperature of 38 to 42°C and a voltage of 120 to 150 V, thereby producing said plating resist with a thickness of 3 to 10 µm on the metal substrate.

6. Method according to claim 4, wherein the electrophoretic coating is carried out with said acrylic based plating solution over 10 to 30 seconds at a temperature of 20 to 30°C and a voltage of 40 to 80 V, thereby producing said plating resist with a thickness of 3 to 10 µm on the metal substrate.

7. Method according to claim 4, wherein the electrophoretic coating is carried out with said epoxy based plating solution over 5 to 30 seconds at a temperature of 20 to 25°C and a voltage of 40 to 60 V, thereby producing said plating resist with a thickness of 3 to 10 µm on the metal substrate.

8. Method according to any one of claims 1 to 7, wherein the metal substrate is selected from a group consisting of copper and copper alloys.

9. Method according to any one of claims 1 to 8, wherein the plating metal is Au, Ag, Ni or NiPd.

10. Method for selective plating of a metal substrate as claimed in claim 1,
wherein said polymeric plating resist is an epoxyurethane, acrylic or epoxy based plating resist
and wherein said laser beam is emitted by a frequency doubled Nd:YAG laser having a wavelength of 532 nm and operated at a repetition rate of about 300 Hz

11. Apparatus for selective plating of a metal substrate, comprising
a plating resist coating station for applying a thin layer of a polymeric plating resist on the metal substrate by electrophoretic coating,
a curing station for curing said plating resist on said substrate,
a laser treatment station for selectively removing said plating resist from said substrate, said laser treatment station comprising
a laser emitting a laser beam with a wavelength in the range of 400 to 1200 nm, and
an optical galvo system for scanning said laser beam on said plating resist according to a pattern along which the plating resist is to be removed from the metal substrate to expose a surface of the metal substrate for metal plating; and
a metal plating station for subjecting said metal substrate to metal plating at the exposed surface thereof.

12. Apparatus according to claim 11, wherein the optical galvo system comprises
a mirror for deflecting the laser beam emitted from said laser onto the plating resist coated on the metal substrate,
a lens for focusing the laser beam deflected by said mirror, and
driving means coupled with said mirror for tilting the mirror for scanning the deflected laser beam on said plating resist along said pattern.

13. Apparatus according to claim 11 or 12, wherein the laser is a frequency doubled Nd:YAG laser emitting a laser beam with a wavelength of 532 nm and operated at a repetition rate of about 300 Hz.

14. Apparatus according to any one of claims 11 to 13, wherein said plating resist coating station comprises an electrophoretic coating apparatus.

15. Reel to reel and strip to strip plating machines comprising an apparatus for selective plating of a metal substrate according to any one of claims 11 to 14.

## Patentansprüche

1. Verfahren zum selektiven Plattieren eines Metallsubstrats enthaltend die Schritte:
Anbringen einer dünnen Schicht eines polymerischen Plattier-Fotolacks auf das Metallsubstrat durch elektrophoretisches Beschichten,
Aushärten des Plattier-Fotolacks auf dem Substrat,
selektives Entfernen des Plattier-Fotolacks vom Substrat durch Aussetzen des Plattier-Fotolacks einem Laserstrahl, der eine Wellenlänge im Bereich von 400 bis 1200 nm hat, und Abtasten des genannten Laserstrahls auf dem Plattier-Fotolack durch ein optisches Galvosystem entsprechend einem Muster, nach dem das Metallsubstrat metallplattiert werden soll, wobei der Plattier-Fotolack so gewählt ist, dass er zumindest im Wesentlichen für den Laserstrahl transparent ist, und das Metallsubstrat so gewählt ist, dass es zumindest einen wesentlichen Teil der Energie des Laserstrahls absorbiert, wodurch ein wesentlicher Teil der Laserenergie durch den Plattier-Fotolack durchgelassen wird und vom Metallsubstrat absorbiert wird, was dazu führt, dass das Metallsubstrat auf seiner Oberfläche erwärmt wird, dass es am Übergang zwischen dem beschichtenden Fotolack und dem Metallsubstrat ein Plasma bildet, wobei das Plasma bewirkt, dass der Plattier-Fotolack darüber weggeblasen wird, und dabei die Oberfläche des Metallsubstrats entsprechend dem Muster geeignet für das Metallplattieren freigelegt wird,
Aussetzen des Substrats an seiner freigelegten Oberfläche dem Metallplattieren.

2. Verfahren nach Anspruch 1, wobei das teilweise Entfernen des Plattier-Fotolacks durch einen frequenzverdoppelten Nd:YAG-Laser geschieht, der einen Laserstrahl mit einer Wellenlänge von 532 nm emittiert und mit einer Wiederholungsfrequenz von ungefähr 300 Hz betrieben wird.

3. Verfahren nach Anspruch 2, wobei das teilweise Entfernen des Plattier-Fotolacks durch einen einzigen Schuss des Nd:YAG-Lasers geschieht, der eine Energie von 5 bis 100 mJ pro Puls, eine Energiedichte von 28 bis 50 mJ/mm², eine Pulsdauer von 3 bis 30 ns und eine Spitzenleistung von 0,3 bis 16 MW hat.

4. Verfahren nach Anspruch 1, wobei eine auf Epoxyurethan, Acryl oder Epoxyd basierende Plattierungslösung verwendet wird, um den polymerischen Plattier-Fotolack auf dem Metallsubstrat durch das elektrophoretische Beschichten herzustellen.

5. Verfahren nach Anspruch 4, wobei das elektrophoretische Beschichten durch die auf Epoxyurethan basierende Plattierungslösung über 5 bis 30 Sekunden bei einer Temperatur von 38 bis 42°C und einer Spannung von 120 bis 150 V geschieht, wodurch der Plattier-Fotolack mit einer Dicke von 3 bis 10 µm auf dem Metallsubstrat hergestellt wird.

6. Verfahren nach Anspruch 4, wobei das elektrophoretische Beschichten durch die auf Acryl basierende Plattierungslösung über 10 bis 30 Sekunden bei einer Temperatur von 20 bis 30°C und einer Spannung von 40 bis 80 V geschieht, wodurch der Plattier-Fotolack mit einer Dicke von 3 bis 10 µm auf dem Metallsubstrat hergestellt wird.

7. Verfahren nach Anspruch 4, wobei das elektrophoretische Beschichten durch die auf Epoxyd basierende Plattierungslösung über 5 bis 30 Sekunden bei einer Temperatur von 20 bis 25°C und einer Spannung von 40 bis 60 V geschieht, wodurch der Plattier-Fotolack mit eine Dicke von 3 bis 10 µm auf dem Metallsubstrat hergestellt wird.

8. Verfahren nach einem der Ansprüche 1 bis 7, wobei der Metallträger aus einer Gruppe ausgewählt wird, die Kupfer und Kupferlegierungen enthält.

9. Verfahren nach einem der Ansprüche 1 bis 8, wobei das Plattiermetall Au, Ag, Ni oder NiPd ist.

10. Verfahren zum selektiven Plattieren eines Metallsubstrats nach Anspruch 1, wobei der polymerische Plattier-Fotolack ein auf Epoxyurethan, Acryl oder Expoxyd basierender Plattierungslack ist, und wobei der Laserstrahl von einem frequenzverdoppelten Nd:YAG-Laser emittiert wird, der eine Wellenlänge von 532 Nm hat und bei einer Wiederholungsfrequenz von etwa 300 Hz betrieben wird.

11. Vorrichtung zum selektiven Plattieren eines Metallsubstrats enthaltend
eine Plattier-Fotolackbeschichtungsstation zum Aufbringen einer dünnen Schicht eines polymerischen Plattier-Fotolacks auf das Metallsubstrat durch elektrophoretisches Beschichten,
eine Aushärtestation, um den Plattier-Fotolack auf dem Substrat auszuhärten,
eine Laserbehandlungsstation zum selektiven Entfernen des Plattier-Fotolacks vom Substrat, wobei die Laserbehandlungsstation enthält
einen Laser, der einen Laserstrahl mit einer Wellenlänge im Bereich von 400 bis 1200 nm emittiert, und
ein optisches Galvosystem zum Abtasten des Laserstrahls auf dem Plattier-Fotolack nach einem Muster, nach dem der Plattier-Fotolack vom Metallsubstrat entfernt werden soll, um eine Oberfläche auf dem Metallsubstrat für das Metallplattieren freizulegen; und
eine Metallplattierungsstation, um das Metallsubstrat dem Metallplattieren an seiner freigelegten Oberfläche auszusetzen.

12. Vorrichtung nach Anspruch 11, wobei das optische Galvosystem enthält:
einen Spiegel zum Ablenken des Laserstrahls, der von dem Laser auf den Plattier-Fotolack emittiert wird, der auf das Metallsubstrat beschichtet wurde,
eine Linse, um den Laserstrahl, der von dem genannten Spiegel abgelenkt wurde, zu fokussieren, und
ein Antriebsmittel, das mit dem Spiegel gekoppelt ist zum Neigen des Spiegels für das Abtasten des abgelenkten Laserstrahls auf dem Plattier-Fotolack nach dem Muster.

13. Vorrichtung nach Anspruch 11 oder 12, wobei der Laser ein frequenzverdoppelter Nd:YAG-Laser ist, der einen Laserstrahl mit einer Wellenlänge von 532 nm emittiert und bei einer Wiederholungsfrequenz von etwa 300 Hz betrieben wird.

14. Vorrichtung nach einem der Ansprüche 11 bis 13, wobei die Plattier-Fotolackbeschichtungsstation eine elektrophoretische Beschichtungsvorrichtung enthält.

15. Zweispulige und zweistreifige Plattierungsmaschinen, die eine Vorrichtung zum selektiven Plattieren eines Metallsubstrats nach einem der vorhergehenden Ansprüche 11 bis 14 enthalten.

## Revendications

1. Procédé de placage sélectif d'un substrat métallique qui comprend les étapes consistant à :
appliquer une couche mince d'un masque de placage polymère sur le substrat métallique par dépôt électrophorétique,
durcir ledit masque de placage sur ledit substrat,
éliminer sélectivement ledit masque de placage dudit substrat en soumettant ledit masque de placage à un faisceau laser ayant une longueur d'onde comprise dans l'intervalle de 400 à 1200 nm et en balayant ledit faisceau laser sur ledit masque de placage au moyen d'un système galvanométrique optique selon un motif le long duquel le substrat métallique doit être recouvert d'un placage métallique, le masque de placage étant choisi afin d'être au moins pratiquement transparent audit faisceau laser et le substrat métallique étant choisi pour absorber au moins une partie importante de l'énergie dudit faisceau laser, et ainsi une partie importante de l'énergie du laser est transmise à travers ledit masque de placage et absorbée par ledit substrat métallique ce qui conduit au chauffage dudit substrat métallique sur sa surface pour former un plasma à l'interface entre le masque de revêtement et le substrat métallique, le plasma amenant le masque de placage sur le dessus à être projeté pour exposer ainsi la surface du substrat métallique le long dudit motif convenable pour le placage métallique,
soumettre ledit substrat à un placage métallique au niveau de sa surface exposée.

2. Procédé selon la revendication 1, dans lequel l'élimination sélective dudit masque de placage est réalisée avec un laser Nd :YAG doublé en fréquence émettant un faisceau laser avec une longueur d'onde de 532 nm et actionné à une fréquence de répétition d'environ 300 Hz.

3. Procédé selon la revendication 2, dans lequel l'élimination sélective dudit masque de placage est réalisée par un mode pas à pas dudit laser Nd : YAG ayant une énergie de 5 à 100 mJ par impulsion, une densité d'énergie de 28 à 50 mJ/mm² , une durée d'impulsion de 3 à 30 ns et une puissance de crête de 0,3 à 16 MW.

4. Procédé selon la revendication 1, dans lequel on utilise une solution de placage à base d'époxyuréthane, acrylique et époxy pour produire ledit masque de placage polymère sur le substrat métallique par ledit dépôt électrophorétique.

5. Procédé selon la revendication 4, dans lequel le dépôt électrophorétique est réalisé avec ladite solution de placage à base d'époxyuréthane sur 5 à 30 secondes à une température de 38 à 42°C et une tension de 120 à 150 V, ce qui permet ainsi de produire ledit masque de placage avec une épaisseur de 3 à 10 µm sur le substrat métallique.

6. Procédé selon la revendication 4, dans lequel le dépôt électrophorétique est réalisé avec ladite solution de placage à base acrylique sur 10 à 30 secondes à une température de 20 à 30°C et une tension de 40 à 80 V, ce qui permet ainsi de produire ledit masque de placage avec une épaisseur de 3 à 10 µm sur le substrat métallique.

7. Procédé selon la revendication 4, dans lequel le dépôt électrophorétique est réalisé avec ladite solution de placage à base d'époxy sur 5 à 30 secondes à une température de 20 à 25°C et une tension de 40 à 60 V, ce qui permet ainsi de produire ledit masque de placage avec une épaisseur de 3 à 10 µm sur le substrat métallique.

8. Procédé selon l'une quelconque des revendications 1 à 7, dans lequel le substrat métallique est choisi dans un groupe comprenant le cuivre et les alliages de cuivre.

9. Procédé selon l'une quelconque des revendications 1 à 8, dans lequel le métal de placage est Au, Ag, Ni ou NiPd.

10. Procédé de placage sélectif d'un substrat métallique selon la revendication 1, dans lequel ledit masque de placage polymère est un masque de placage à base d'époxyuréthane, acrylique ou époxy et dans lequel ledit faisceau laser est émis par un laser Nd : YAG doublé en fréquence ayant une longueur d'onde de 532 nm et actionné à une fréquence de répétition d'environ 300 Hz.

11. Appareil pour le placage sélectif d'un substrat métallique, qui comprend
un poste de dépôt de masque de placage pour appliquer une couche mince d'un masque de placage polymère sur le substrat métallique par dépôt électrophorétique,
un poste de durcissement pour durcir ledit masque de placage sur ledit substrat,
un poste de traitement au laser pour éliminer de manière sélective ledit masque de placage dudit substrat , ledit poste de traitement au laser comprenant
un laser émettant un faisceau laser avec une longueur d'onde dans l'intervalle de 400 à 1200 nm,
un système galvanométrique optique pour balayer ledit faisceau laser sur ledit masque de placage selon le motif le long duquel le masque de placage doit être éliminé du substrat métallique pour exposer une surface du substrat métallique pour le placage du métal ; et
un poste de placage de métal pour soumettre ledit substrat métallique à un placage de métal au niveau de sa surface exposée.

12. Appareil selon la revendication 11, dans lequel le système galvanométrique optique comprend
un miroir pour défléchir le faisceau laser émis à partir dudit laser sur le masque de placage déposé sur le substrat métallique,
une lentille pour focalisér le faisceau laser défléchi par ledit miroir , et
un moyen de commande couplé avec ledit miroir pour incliner le miroir pour balayer le faisceau laser défléchi sur ledit masque de placage le long dudit motif.

13. Appareil selon la revendication 11 ou 12, dans lequel le laser est un laser Nd :YAG doublé en fréquence émettant un faisceau laser avec une longueur d'onde de 532 nm et actionné à une fréquence de répétition d'environ 300 Hz.

14. Appareil selon l'une quelconque des revendications 11 à 13, dans lequel ledit poste de dépôt du masque de placage comprend un appareil de dépôt électrophorétique.

15. Machines de placage bobine à bobine et bande à bande comprenant un appareil pour le placage sélectif d'un substrat métallique selon l'une quelconque des revendications 11 à 14.
